# EUROPEAN PATENT APPLICATION

(11) **EP 1 662 746 A1**
(43) Date of publication of application: **31.05.2006**
(21) Application number: 05024881.4
(22) Date of filing: 15.11.2005
(51) Int. Cl.: H04L 29/06

(54) **Method to facilitate the use of multiple communication protocols in a communication network**

(30) Priority: 24.11.2004 US 997502
(71) Applicant: UTStarcom, Incorporated, Alameda, CA 94502 (US)
(72) Inventor: Warrier, Chandra, Schaumburg Illinois 60173 (US); Bhatia, Ravideep, West Dundee Illinois 60118 (US)
(74) Representative: HOFFMANN EITLE

(57) **Abstract**

A mobile node using non-Mobile Internet Protocol version 6 is able to successfully communicate via Mobile Internet Protocol version 4 infrastructure via an encapsulating tunnel as is established between a first network element (such as a Packet Data Serving Node) and a second network element (such as a Home Agent). Extensions and/or codes can be conveyed via Mobile Internet Protocol version 4 Registration Requests/Responses that facilitate the automated establishment of, for example, a 6to4 tunnel for these purposes.

## Description

### Technical Field

This invention relates generally to supporting communications for mobile communication nodes and more particularly to supporting communications via a communication network that ordinarily uses a communication protocol other than a protocol as is used by the mobile communication node.

### Background

The Internet Protocol (IP) has been, by essentially any objective standard, highly successful. IP-based platforms and communications continue to grow both with respect to relative ubiquity and capability. Unfortunately, this growth and expansion has not been possible without making occasional changes to the corresponding protocol. For example, numerous needs and requirements (including especially a need for expanded allocatable address resources) led from so-called Internet Protocol version 4 to Internet Protocol version 6. Internet Protocol version 6 has not, in a single stroke, fully supplanted Internet Protocol version 4, however.

The enormous existing installed Internet Protocol version 4 base represents a legacy that will likely persist for some considerable period of time even as the reach and breadth of the Internet continues to expand through the auspices of Internet Protocol version 6. Various techniques such as, but not limited to, so-called 6to4 tunneling serve as a bridging mechanism to permit compatible use of both Internet Protocol version 4 and Internet Protocol version 6 elements when supporting some network communications.

In the meantime, efforts to further develop the Internet Protocol continues unabated. As one significant example, elements of so-called Mobile Internet Protocol version 6 have been at least partially proposed to better facilitate some of the unique needs of mobile communication platforms (including, for example, the more challenging address allocation issues presented by mobile communication nodes). Notwithstanding the considerable promise of Mobile Internet Protocol version 6, however, there currently exists no implementing standard nor is this protocol available in any widespread manner. Resistance to further implementation likely lies in many sources but at least one problem involves the likely difficulties to be faced upon introducing (or compelling) Mobile Internet Protocol version 6 into a reality that will likely include both (non-Mobile) Internet Protocol version 6 and Mobile Internet Protocol version 4.

Something of a conundrum therefore exists. On the one hand, the need for Mobile Internet Protocol version 6 and the capabilities it represents grows with every passing day. On the other hand, continued contemporaneous expansion of the Internet via non-Mobile Internet Protocol version 6, along with the continued persistence of Internet Protocol version 4 (including Mobile Internet Protocol version 4), comprises an ever-more-compelling impediment to a successful launch of Mobile Internet protocol version 6.

### Brief Description of the Drawings

The above needs are at least partially met through provision of the method to facilitate use of multiple communication protocols in a communication network described in the following detailed description, particularly when studied in conjunction with the drawings, wherein:

FIG. 1 comprises a flow diagram as configured in accordance with various embodiments of the invention;

FIG. 2 comprises a flow diagram as configured in accordance with various embodiments of the invention;

FIG. 3 comprises a schematic view of a Registration Request as configured in accordance with various embodiments of the invention;

FIG. 4 comprises a flow diagram as configured in accordance with various embodiments of the invention; and

FIG. 5 comprises a signal flow diagram as configured in accordance with various embodiments of the invention.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the present invention. Also, common but well-understood elements that are useful or necessary in a commercially feasible embodiment are often not depicted in order to facilitate a less obstructed view of these various embodiments of the present invention. It will also be understood that the terms and expressions used herein have the ordinary meaning as is usually accorded to such terms and expressions by those skilled in the corresponding respective areas of inquiry and study except where other specific meanings have otherwise been set forth herein.

### Detailed Description

Generally speaking, pursuant to these various embodiments, a first network element (such as, but not limited to, a Packet Data Serving Node) receives a message from a mobile communication node that seeks to facilitate a communication via a communication network. The communication network ordinarily uses a first communication protocol (such as, but not limited to, Mobile Internet Protocol version 4) while the mobile communication node uses a second, different communication protocol (such as, but not limited to, Internet Protocol version 6). So configured, the message as received by the first network element comprises a second communication protocol message.

At least a portion of a temporarily assignable first address (such as, but not limited to, a Mobile Internet Protocol version 4 temporarily assignable first address) is then automatically assigned (by, for example (though not limited to) a Home Agent for the mobile communication node) for use by the mobile communication node. The communication network (via, for example, the first network element), upon detecting at least a portion of the assigned temporary address, automatically responds by facilitating the desired communication wherein the mobile communication node communicates using the second communication protocol and at least a portion of the communication network uses the first communication protocol.

So configured, for example, an Internet Protocol version 6 mobile node can communicate compatibly and successfully via a communication network that includes, at least in part, Mobile Internet Protocol version 4 elements. These teachings, in effect, provide a kind of proxy Mobile Internet Protocol version 6 functionality using, as will be shown below in more detail, such existing capabilities and tools as 6to4 tunneling and Mobile Internet Protocol version 4.

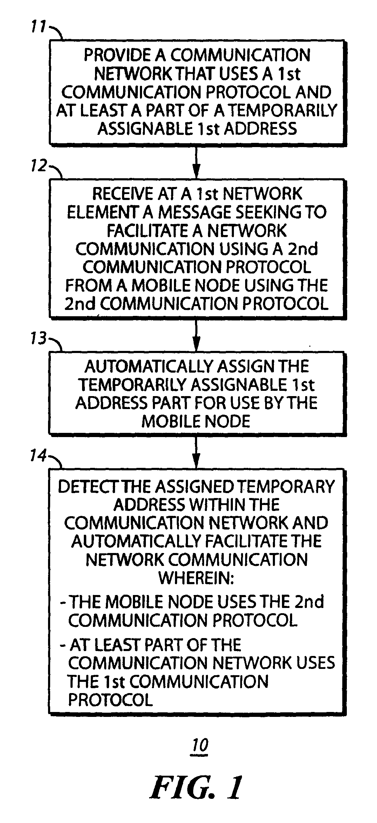

These and other benefits may become more evident upon making a thorough review and study of the following detailed description. Referring now to the drawings, and in particular to FIG. 1, a general process 10 provides 11 for a communication network that uses a first communication protocol and at least a portion of one temporarily assignable first address to support communications with mobile communication nodes. The first communication protocol comprises, in a preferred embodiment, Mobile Internet Protocol version 4 as is known in the art. Accordingly, and also as per a preferred embodiment, the temporarily assignable first address comprises a Mobile Internet Protocol version 4 temporarily assignable first address. This communication network will typically further comprise various other elements and nodes including a Radio Access Network that interoperates compatibly with the mobile communication nodes of interest. Such other elements and nodes are generally well understood in the art and require no further elaboration here aside from specific points as are set forth below where appropriate.

This process 10 further provides for receiving 12 at a first network element (as comprises a part of the communication network) a message seeking to facilitate a communication via the communication network using a second communication protocol that is different than the first communication protocol and which message is sourced by a mobile communication node that uses the second communication protocol. The identity of the first network element can and likely should vary with the needs and or capabilities of a given network but may comprise, for example, a Packet Data Serving Node. In a preferred present embodiment, the second communication protocol comprises non-Mobile Internet Protocol version 6 (i.e., Internet Protocol version 6 as is presently standardized and available). So configured and arranged, the above-mentioned message can comprise at least one non-Mobile Internet Protocol version 6 message and, accordingly, may further comprise a Point-to-Point Protocol message (with such message structures being generally well understood in the art).

This process 10 then provides for automatically assigning 13 the at least a portion of one temporarily assignable first address to provide an assigned temporary address for use by the mobile communication node to support the communication. This assignment can be facilitated by, for example, a Home Agent element as comprises a part of the communication network. (This assignment can also comprise, if desired, receipt of a message (such as a message received by the first network element comprising an instruction to the first network element to initiate communications with such a Home Agent) from a corresponding Authentication, Authorization, and Accounting element, which message serves to facilitate the automatic assignment of the temporarily assignable first address.)

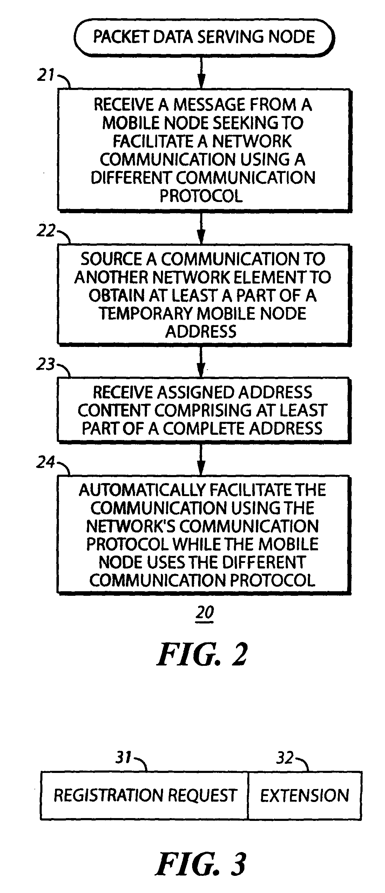

This step of automatically assigning at least a portion of a temporarily assignable first address to provide an assigned temporary address can comprise, in a preferred approach, provision of an address prefix. As but one illustrative example, the first network element can transmit to the Home Agent a Mobile Internet Protocol version 4 Registration Request to thereby facilitate allocation of a 6to4 prefix for use by the mobile communication node upon supporting the desired communication. The Home Agent can then reply with a Mobile Internet Protocol version 4 Registration Response message that comprises the address prefix. For example, and with momentary reference to FIG. 3, the Registration Request 31 can make use of a vender specific extension portion 32 (which extensions are accommodated by the implementing standards) that comprises an instruction or indication to the Home Agent to so provide this address prefix.

Referring again to FIG. 1, the process 10 then provides, upon detecting 14, within the communication network, at least a portion of the assigned temporary address, for automatically responding by facilitating the communication wherein the mobile communication node communicates using the second communication protocol and at least a portion of the network uses the first communication protocol. Such detection preferably occurs at the first network element though detection elsewhere can also serve these purposes. To illustrate such facilitation, this process 10 can effect automatically establishing a first communication protocol link that supports a second communication protocol channel (for example, the process 10 can establish a Mobile Internet Protocol version 4 tunnel that encapsulates a non-Mobile Internet Protocol version 6 channel as is otherwise understood in the art).

So configured, the mobile communication needs of a mobile communication node that uses non-Mobile Internet Protocol version 6 can effectively receive at least some Mobile Internet Protocol version 6-like benefits notwithstanding its use and reliance of a communication network that itself makes use of Mobile Internet Protocol version 4.

As mentioned earlier, the first network element can comprise a Packet Data Serving Node. Such elements are well known in the art and often comprise a fully or at least partially programmable platform that can be readily configured to accord with these teachings. With reference to FIG. 2, a corresponding process 20 will now be described.

Pursuant to this process 20, a Packet Data Serving Node can receive 21 a message that seeks to facilitate a communication via a network that uses a communication protocol such as Mobile Internet Protocol version 4. This message is sourced by a mobile communication node that uses a different communication protocol such as, for example, non-Mobile Internet Protocol version 6 with this latter protocol being used to convey the indicated message.

Pursuant to this process 20, the Packet Data Serving Node then sources 22 a communication to another network element, such as an Authentication, Authorization, and Accounting element, to obtain at least a portion (such as an address prefix) of a temporary address to use for the mobile communication node when supporting the requested communication. (If desired, this message can prompt an exchange between the Packet Data Serving Node and an Authentication, Authorization, and Accounting element that leads to receipt, by the Packet Data Serving Node, of a message from the Authentication, Authorization, and Accounting element that instructs the Packet Data Serving Node to source the aforementioned communication to the specified network element to obtain the temporary address information.) This other network element can comprise, for example, a Home Agent. The sourced communication can comprise a Mobile Internet Protocol version 4 Registration Request message as noted earlier that comprises an interface identifier. If desired, this Registration Request can comprise, for example, a vender specific attribute that indicates the kind of predetermined response being sought (i.e., provision of temporary address information in support of a mobile communication node that is using non-Mobile Internet Protocol version 6).

The Packet Data Serving Node then receives 23 assigned address content that comprises at least a portion of a complete address. Again, this will typically comprise an address prefix. This assigned address content can be conveyed, for example, via a registration reply message such as a Mobile Internet Protocol version 4 Registration Response message. More particularly, the address prefix can be included within an extension portion of a Registration Response message.

The Packet Data Serving Node then uses this temporary address information to automatically facilitate 24 the requested communication such that the network supports the communication using the network's communication protocol while the mobile node uses its own protocol. This can be effected, for example, by using the network's protocol to automatically establish a network protocol-based link that supports a mobile node protocol-based channel. As one pertinent illustration, a Mobile Internet Protocol version 4 tunnel can be employed to encapsulate a non-Mobile Internet Protocol version 6 channel.

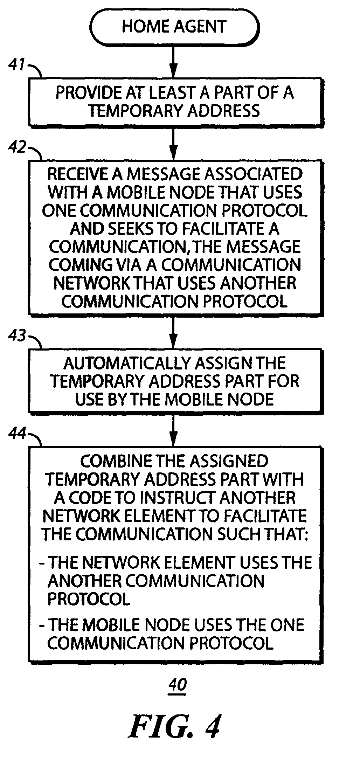

Referring now to FIG. 4, certain specifics with respect to the role of the Home Agent in a preferred deployment will be presented.

By this preferred process 40, the Home Agent provides 41 at least a portion of a temporary address. More typically, the Home Agent will provide a pool of allocatable Mobile Internet Protocol version 4 address prefix extensions that can be used to support an Internet Protocol version 6 communication. Upon then receiving 42 a message (from, for example, a Packet Data Serving Node) seeking to facilitate a communication via a network using one communication protocol as per a mobile communication that itself uses a different communication protocol, the Home Agent can respond by automatically assigning 43 one of the temporary address portions from the indicated pool. If desired, this response can further comprise combining 44 such assigned temporary address information with a code (or codes) that instruct the recipient network element (such as, in this illustration, the Packet Data Serving Node) to facilitate the communication in a manner wherein the mobile communication node communicates using its communication protocol (i.e., in this example, non-Mobile Internet Protocol version 6) while the network element itself continues to use the corresponding network protocol (i.e., in this example, Mobile Internet Protocol version 4). Such a combination can comprise, for example, providing the code as an extension to the assigned temporary address portion information. Other approaches could also be utilized as appropriate.

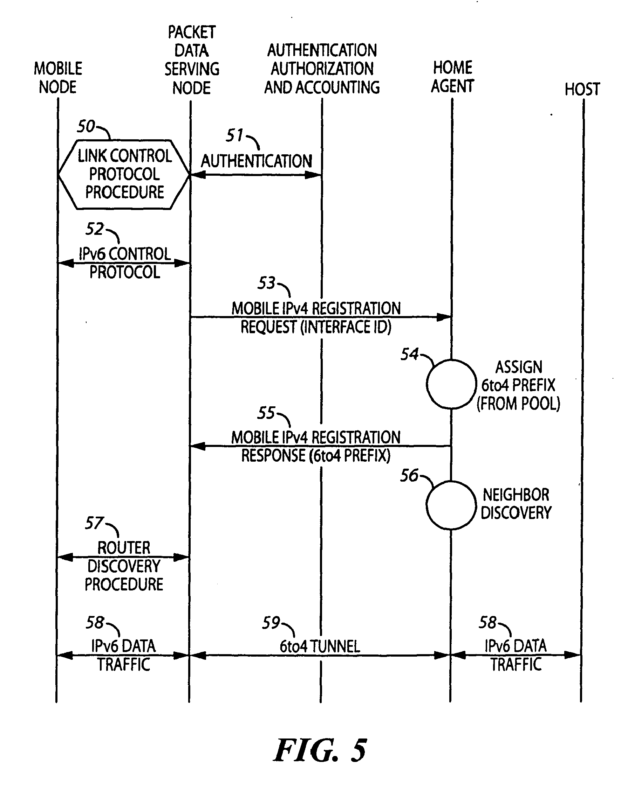

Referring now to FIG. 5, an illustrative example will be provided. Those skilled in the art will readily appreciate that this example comprises a non-exhaustive illustration and that these teachings can be readily employed in other useful ways and contexts.

When seeking to establish a communication via a given network, a non-Mobile Internet Protocol version 6 mobile node engages in Link Control Protocol procedure 50 with a Packet Data Serving Node as is generally well understood in the art. During this exchange, the Packet Data Serving Node interacts with a corresponding Authentication, Authorization, and Accounting element wherein the latter provides an authentication message 51 to the Packet Data Serving Node to essentially approve the request of the mobile node. As noted earlier, this authentication message can comprise more particular instructions and/or a specific Home Agent address that lead the Packet Data Serving Node to effect the following described actions with a Home Agent, if desired or appropriate.

The mobile node and Packet Data Serving Node then engage in non-Mobile Internet Protocol version 6 messaging 52 wherein the former will seek, in accordance with prior art practice, to negotiate a link-local address. The Packet Data Serving Node can then construct a Mobile Internet Protocol version 4 Registration Request message 53 that includes the interface identifier of the Mobile Node and transmit that message 53 to the Home Agent. In this example the Home Agent then assigns 54 a 6to4 prefix from a pool of such prefixes in accord with well-established prior art practice and transmits a Mobile Internet Protocol version 4 Registration Response message 55 that includes the assigned 6to4 prefix to the Packet Data Serving Node. (This message may also include, if desired, a code that prompts automated establishment of the 6to4 tunnel described below.) The Home Agent can then conduct a neighbor discovery process 56 so that the network in general is aware of this assignment to thereby facilitate the forwarding of subsequent data to the mobile node (again in accord with present practice).

In this example the Packet Data Serving Node then uses router discovery procedures 57 to effect allocation of this 6to4 prefix to the mobile node. Thereafter, the Packet Data Serving Node and the Mobile Node establish a 6to4 tunnel 59 between themselves to facilitate the Internet Protocol version 6 data traffic 58 of the mobile node.

So configured, considerable reuse of existing Internet Protocol version 4 infrastructure remains viable and useful. At the same time, mobile nodes are able to receive Mobile Internet Protocol version 6-like treatment and access even when they are incapable of implementing Mobile Internet Protocol version 6.

Those skilled in the art will recognize that a wide variety of modifications, alterations, and combinations can be made with respect to the above described embodiments without departing from the spirit and scope of the invention, and that such modifications, alterations, and combinations are to be viewed as being within the ambit of the inventive concept.

## Claims

1. A method comprising:
- providing a communication network that uses a first communication protocol and at least a portion of one temporarily assignable first address to support communications with mobile communication nodes;
- receiving at a first network element a message seeking to facilitate a communication via the network using a second communication protocol that is different than the first communication protocol, which message is sourced by a mobile communication node using the second communication protocol;
- automatically assigning the at least a portion of one temporarily assignable first address to provide an assigned temporary address for use by the mobile communication node to support the communication;
- detecting, within the communication network, at least a portion of the assigned temporary address and automatically responding thereto by facilitating the communication wherein the mobile communication node communicates using the second communication protocol and at least a portion of the network uses the first communication protocol.

2. The method of claim 1 wherein providing a communication network that uses a first communication protocol further comprises providing a communication network that uses a first communication protocol that comprises Mobile Internet Protocol version 4.

3. The method of claim 2 wherein providing a communication network that uses a first communication protocol and at least one temporarily assignable first address further comprises providing a communication network that uses at least one temporarily assignable first address that comprises a Mobile Internet Protocol version 4 temporarily assignable first address.

4. The method of claim 3 wherein receiving at a first network element a message seeking to facilitate a communication via the network using a second communication protocol further comprises receiving at a first network element a message seeking to facilitate a communication via the network using a second communication protocol that comprises non-mobile Internet Protocol version 6.

5. The method of claim 1 wherein receiving at a first network element further comprises receiving at a Packet Data Serving Node.

6. The method of claim 1 wherein receiving at a first network element a message seeking to facilitate a communication via the network further comprises receiving at a first network element a Point-to-Point Protocol message.

7. The method of claim 6 wherein receiving at a first network element a message seeking to facilitate a communication via the network further comprises receiving at a first network element at least one non-mobile Internet Protocol version 6 message.

8. The method of claim 1 wherein automatically assigning the at least a portion of one temporarily assignable first address to provide an assigned temporary address further comprises providing an address prefix.

9. The method of claim 8 wherein providing an address prefix further comprises providing the address prefix in an extension portion of a message.

10. The method of claim 9 wherein the extension portion comprises a vender specific extension portion of a Mobile Internet Protocol version 4 Registration Reply message.

11. The method of claim 1 wherein detecting, within the communication network, at least a portion of the assigned temporary address and automatically responding thereto by facilitating the communication further comprises detecting the portion of the assigned temporary address at the first network element.

12. The method of claim 11 wherein the first network element comprises a Packet Data Serving Node.

13. The method of claim 11 wherein detecting the portion of the assigned temporary address at the first network element further comprises detecting a vender specific extension portion.

14. The method of claim 1 wherein detecting, within the communication network, at least a portion of the assigned temporary address and automatically responding thereto by facilitating the communication further comprises automatically establishing a first communication protocol link that supports a second communication protocol channel.

15. The method of claim 14 wherein automatically establishing a first communication protocol link that supports a second communication protocol channel further comprises automatically establishing a Mobile Internet Protocol version 4 tunnel that encapsulates a non-Mobile Internet Protocol version 6 channel.

16. The method of claim 1 wherein automatically assigning the at least one temporarily assignable first address further comprises automatically assigning the at least one temporarily assignable first address at a home agent element in the communication network.

17. The method of claim 1 wherein automatically assigning the at least a portion of one temporarily assignable first address to provide an assigned temporary address for use by the mobile communication node to support the communication further comprises receiving a message from an Authentication, Authorization, and Accounting element, which message serves to facilitate the automatic assignment of the at least a portion of one temporarily assignable first address.

18. The method of claim 17 wherein the message comprises, at least in part, an instruction to initiate communications with a home agent.

19. The method of claim 18 and further comprising transmitting a Mobile Internet Protocol version 4 Registration Request to the home agent to thereby facilitate allocation of a 6to4 prefix for the mobile communication node.

20. A method for use at a first network element comprising:
- receiving a message seeking to facilitate a communication via a network using a first communication protocol that is different than a second communication protocol that is used by the network, which message is sourced by a mobile communication node using the first communication protocol;
- sourcing a communication to another network element to obtain at least a portion of a temporary address to use for the mobile communication node when supporting the communication;
- receiving assigned address content comprising at least a portion of a complete address;
- automatically responding to the assigned address content by facilitating the communication using the second communication protocol wherein the mobile communication node communicates using the first communication protocol.

21. The method of claim 20 wherein the first network element comprises a Packet Data Serving Node.

22. The method of claim 21 wherein the another network element comprises a Home Agent.

23. The method of claim 20 wherein the first communication protocol comprises non-mobile Internet Protocol version 6.

24. The method of claim 23 wherein the second communication protocol comprises Mobile Internet Protocol version 4.

25. The method of claim 23 wherein sourcing a communication to another network element to obtain at least one temporary address to use for the mobile communication node when supporting the communication further comprises sourcing a Mobile Internet Protocol version 4 registration request message that comprises an interface identifier.

26. The method of claim 25 wherein receiving assigned address content further comprises receiving, in response to the registration request message, a Mobile Internet Protocol version 4 registration reply message that comprises at least a portion of a temporarily assigned address to be used to support the mobile communication node.

27. The method of claim 26 wherein the at least a portion of a temporarily assigned address comprises an address prefix.

28. The method of claim 27 wherein the at least a portion of a temporarily assigned address further comprises a vender specific attribute indicating a predetermined response.

29. The method of claim 28 wherein the predetermined response comprises facilitating the communication using the second communication protocol wherein the mobile communication node communicates using the first communication protocol by automatically establishing a second communication protocol link that supports a first communication protocol channel.

30. The method of claim 29 wherein automatically establishing a second communication protocol link that supports a first communication protocol channel further comprises automatically establishing a Mobile Internet Protocol version 4 tunnel that encapsulates a non-Mobile Internet Protocol version 6 channel.

31. The method of claim 20 and further comprising:
- receiving a message from an Authentication, Authorization, and Accounting element, which message comprises an instruction to source the communication to another network element to obtain at least a portion of a temporary address to use for the mobile communication node when supporting the communication.

32. A method for use at a first network element comprising:
- providing at least a portion of a temporary address;
- receiving a message seeking to facilitate a communication via a network using a first communication protocol, which message is occasioned by a mobile communication node using a second communication protocol that is different from the first communication protocol;
- automatically assigning the at least a portion of a temporary address to provide an assigned temporary address portion for use by the mobile communication node to support the communication;
- combining the assigned temporary address portion with a code to instruct another network element to facilitate the communication wherein the mobile communication node communicates using the first communication protocol the and another network element uses the second communication protocol.

33. The method of claim 32 wherein providing at least a portion of a temporary address further comprises providing an address prefix.

34. The method of claim 33 wherein providing an address prefix further comprises providing a Mobile Internet Protocol version 4 address prefix extension.

35. The method of claim 32 wherein receiving a message further comprises receiving a message via another network element.

36. The method of claim 35 wherein receiving a message via another network element further comprises receiving a message via a Packet Data Serving Node.

37. The method of claim 32 wherein combining the assigned temporary address portion with a code further comprises disposing the code within at least one vender specific attribute portion as an extension to the assigned temporary address portion.

38. The method of claim 32 wherein:
- receiving a message seeking to facilitate a communication via a network using a first communication protocol, which message is occasioned by a mobile communication node using a second communication protocol that is different from the first communication protocol further comprises receiving a message seeking to facilitate a communication via a network using Mobile Internet Protocol version 4, which message is occasioned by a mobile communication node using non-mobile Internet Protocol version 6;
- combining the assigned temporary address portion with a code to instruct another network element to facilitate the communication wherein the mobile communication node communicates using the first communication protocol and the first network element uses the second communication protocol further comprises combining the assigned temporary address portion with a code to instruct another network element to facilitate the communication wherein the mobile communication node communicates using the non-Mobile Internet Protocol version 6 and the first network element uses Mobile Internet Protocol version 4.
